# FASCICULE DE BREVET EUROPEEN

(11) **EP 0 406 096 B1**
(45) Date de publication et mention de la délivrance du brevet: **14.07.1993**
(21) Numéro de dépôt: 90401816.5
(22) Date de dépôt: 26.06.1990
(51) Int. Cl.: B60S 1/34

(54) **Dispositif d'essuie-glace à balayage non circulaire, notamment pour véhicule automobile**
Scheibenwischanlage mit nichtkreisförmigem Wischbild, insbesondere für Kraftfahrzeuge
Windscreen wiper device with non-circular wiping pattern, in particular for a motor vehicle

(30) Priorité: 29.06.1989 FR 8908683
(43) Date de publication de la demande: 02.01.1991
(73) Titulaire: VALEO SYSTEMES D'ESSUYAGE, 78180 Montigny-Le-Bretonneux (FR)
(72) Inventeur: Eustache, Jean-Pierre, F-92160 Antony (FR); Arlon, Philippe, F-77330 Ozoir-La-Ferrière (FR)
(74) Mandataire: Gamonal, Didier

(56) Documents cités:
- DE-A- 2 448 981
- FR-A- 2 136 016
- FR-A- 2 178 682
- FR-A- 2 575 714
- PATENT ABSTRACTS OF JAPAN vol. 9, no. 73 (M-368)(1796) 03 avril 1985, & JP-A-59 202955 (ASUMO K.K) 16 novembre 1984,

## Description

La présente invention se rapporte à un dispositif d'essuie-glace à balayage non circulaire, notamment pour véhicule automobile.

Il est déjà connu, notamment dans le document FR-A-2 563 788, un dispositif d'essuie-glace pour vitre, notamment de pare-brise de véhicule automobile, dans lequel un bras d'essuie-glace portant un balai d'essuie-glace est déplacé dans un mouvement de rotation alternatif conjugué à un mouvement de translation de manière à ce que l'ensemble bras-balai ait une trajectoire non circulaire augmentant le champ d'essuyage dans une direction donnée.

Pour ce faire, le dispositif selon le document susmentionné, comporte un élément pivotant portant un palier articulé appartenant au bras d'essuie-glace et portant un arbre oscillant, ledit arbre étant solidaire d'une pièce de guidage coulissante dans une douille de guidage oscillante mais fixe en position.

En fonctionnement, l'élément pivotant est commandé en un mouvement de rotation alternatif de la part d'un moteur d'essuyage, tel qu'un moto-réducteur par exemple, et déplace l'arbre oscillant dans un mouvement circulaire, qui, du fait de la douille de guidage oscillante mais fixe autour d'un point, permet un déplacement relatif entre la pièce de guidage et l'élément pivotant qui se traduit par un mouvement non circulaire de l'ensemble bras-balai.

Ce dispositif, bien que donnant satisfaction, présente l'inconvénient, d'une part, de ne pas pouvoir influencer le mouvement de translation de l'ensemble bras-balai puisque celui-ci est tributaire du mouvement de rotation alternatif et, d'autre part, de présenter des risques de blocage du mécanisme lors d'un éventuel arc-boutement de la pièce de guidage dans la douille de guidage.

La présente invention permet de remédier aux inconvénients mentionnés ci-dessus en présentant un dispositif d'essuie-glace de conception simple et de fonctionnement sûr.

Selon l'invention le dispositif d'essuie-glace à balayage non circulaire, notamment pour véhicule automobile, comportant au moins un bras d'essuie-glace portant un balai d'essuie-glace et qui est déplacé par un mécanisme d'entraînement dans un mouvement de rotation alternatif combiné à un mouvement de translation et comprenant une première bielle portant le bras d'essuie-glace, cette première bielle étant articulée sur un axe mobile avec une deuxième bielle pivotant autour d'un premier axe fixe par rapport à la carrosserie de telle sorte que la première bielle soit susceptible de tourner par rapport à la deuxième autour de l'axe mobile en même temps que l'axe mobile se déplace le long de la surface à essuyer (Dispositif du type illustré dans les figures 1 à 4 de FR-A-2 563 788) est caractérisé en ce que le mécanisme d'entraînement comporte une troisième et une quatrième bielles qui forment avec les première et deuxième bielles précitées un quadrilatère déformable, la première bielle étant reliée par la troisième bielle à une quatrième bielle qui pivote autour du premier ou d'un second axe fixe par rapport à la carrosserie, la quatrième bielle étant reliée cinématiquement avec la deuxième bielle par un deuxième système de bielles articulées formant un pentagone déformable dont la déformation entraîne le mouvement de rotatiion de la première bielle autour de l'axe mobile et le déplacement de l'axe mobile le long de la surface à balayer.

Grâce à ce dispositif le balayage obtenu peut permettre une augmentation de la surface à essuyer dans une direction désirée.

Les autres avantages et caractéristiques de l'invention ressortiront de la description qui va suivre, donnée à titre d'exemple, en se référant aux dessins annexés sur lesquels :
- la figure 1 est un schéma illustrant le balayage obtenu avec le dispositif selon l'invention ;
- la figure 2 est un schéma illustrant les positions des différents éléments du dispositif selon l'invention, au début de la course aller ;
- la figure 3 est un schéma illustrant, d'une manière semblable à la figure 2, la position des différents éléments du dispositif selon l'invention dans une position médiane de la course aller ;
- la figure 4 est un schéma illlustrant la position des différents éléments du dispositif selon l'invention dans la phase terminale de la course aller ;
- la figure 5 montre, en perspective, une réalisation du dispositif selon l'invention ;
- la figure 6 est un schéma illustrant une variante du dispositif selon l'invention;
- la figure 7 est un schema illustrant une autre variante du dispositif selon l'invention.

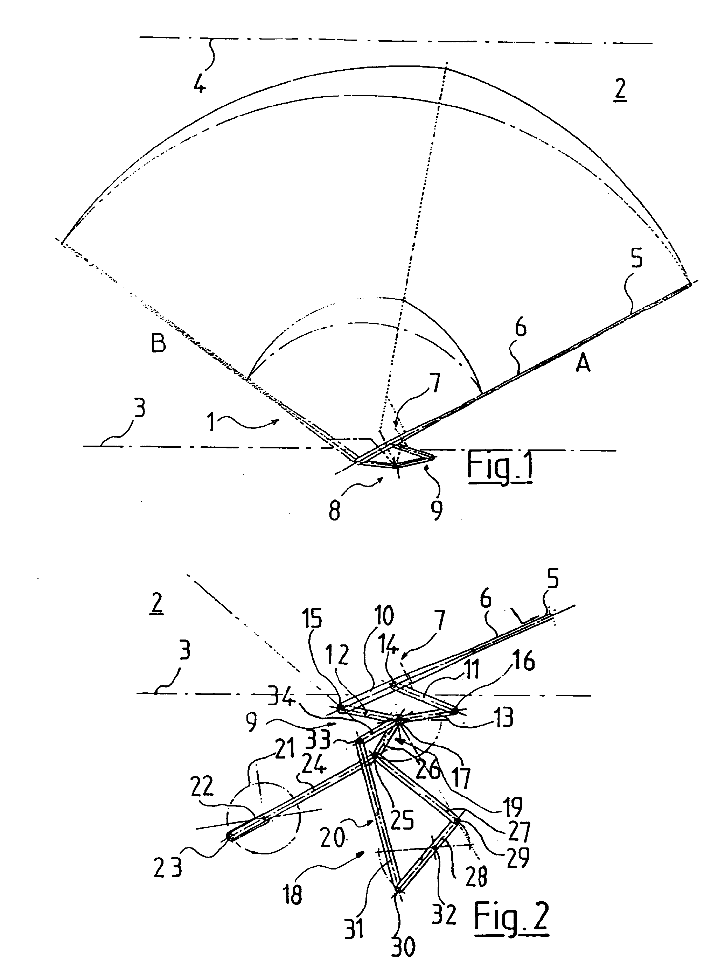

En se reportant plus particulièrement aux figures 1 et 2, on peut voir un dispositif d'essuie-glace 1 apte à essuyer une glace 2, par exemple un pare-brise de véhicule automobile dont le bord inférieur 3 et le bord supérieur 4 sont matérialiséssur la figure 1 par des traits mixtes interrompus.

Le dispositif d'essuie-glace 1 comprend un balai d'essuie-glace 5 porté par un bras d'essuie-glace principal 6 articulé en 7 sur un mécanisme d'entraînement 8 dont seul une partie est visible sur la figure et qui permet de faire débattre l'ensemble bras-balai d'une position extrême A à une autre position extrême B en procurant un balayage non circulaire par déplacement de l'ensemble bras-balai vers le bord supérieur 4 du pare-brise 2.

Le mécanisme d'entraînement 8 comporte un quadrilatère déformable 9 constitué de quatre bielles 10, 11, 12 et 13. La bielle 10, dit bras auxiliaire, supporte l'axe d'articulation du bras principal 6, ici disposé dans le prolongement 4 du bras auxiliaire 10, et les bielles 11, 12, sensiblement parallèles entre elles, sont articulées à l'une de leurs extrémités par des axes 14, 15 sur le bras auxiliaire 10 et, par l'autre de leurs extrémités, relient à articulation par des axes 16, 17 la bielle 13 de façon à former sensiblement un parallélogramme déformable.

L'axe 17 servant d'articulation à la bielle 12 et à la bielle 13 est un axe fixe en position et sert de point de rotation autour duquel est amené à pivoter le parallélogramme 9. De ce fait, l'axe 15 servant d'articulation entre le bras auxiliaire 10 et la bielle 12 décrit une circonférence autour de l'axe 17 en ayant comme rayon la longueur de la bielle 12 et l'axe 16 servant d'articulation entre la bielle 11 et la bielle 13 décrit également une circonférence autour de l'axe 17 en ayant comme rayon la longueur de la bielle 13. De plus l'axe 15 sert de point d'articulation de l'ensemble bras auxiliaire 10, bras principal 6 et balai 5 autour duquel l'ensemble est apte à se débattre angulairement.

Ainsi les bielles 11 et 13 commandent le mouvement de débattement angulaire du bras auxiliaire 10, et de ce fait du bras principal 6 et du balai 5 autour de l'axe 15, alors que la bielle 12 commande le mouvement de translation de l'ensemble bras auxiliaire-bras principal-balai le long de la circonférence décrite par l'axe 15 de façon à obtenir un balayage de la surface à essuyer tel que mieux visible sur la figure 1 et cela en trait plein.

En se reportant à la figure 2, le parallèlogramme 9 est déformé par un système de bielles formant un pentagone 18 comportant deux systèmes de bielles 19, 20 commandés par le même moyen de commande, ici un moteur d'essuyage 21 entraînant un système bielle-manivelle dont la manivelle 22 est tournante par l'intermédiaire du moteur, ladite manivelle étant articulée en 23 à une extrémité d'une bielle 24 et dont l'autre extrémité 25 forme un axe d'articulation pour la commande commune des deux systèmes de bielles 19, 20.

Le premier système de bielle 19 comporte une bielle 26 articulée à une de ses extrémités avec l'axe 25 et dont l'autre de ses extrémités est liée à rotation avec la bielle 13 du quadrilatère déformable 9, les bielles 13 et 26, ainsi conformées, étant aptes à se mouvoir conjointement angulairement autour de l'axe 17 fixe de façon à ce que tout débattement angulaire de la bielle 26 se répercute sur la bielle 13.

Le deuxième système de bielle 20 comporte une bielle 27 liée à articulation par une de ses extrémités avec l'axe 25 en formant un angle non nul avec la bielle 26 et dont l'autre extrémité est articulée sur une bielle 28 par un axe 29, l'autre extrémité de la bielle 28 portant un axe d'articulation 30 pour une autre bielle 31,la bielle 28 étant montée pivotante autour d'un axe 32 fixe, situé entre ses deux extrémités, ici approximativement à un tiers de sa longueur.

La bielle 31 est reliée à articulation par un axe 32 à une bielle 34 liée à rotation avec la bielle 12 tout en pouvant s'articuler autour de l'axe 17 précédemment défini.

Ainsi, les bielles 11 et 13 sont commandées par la bielle 26 liée à la bielle de commande 24 alors que la bielle 12 est commandée par la bielle 27 liée également à la bielle de commande 24 et par les bielles 28, 31 et 34.

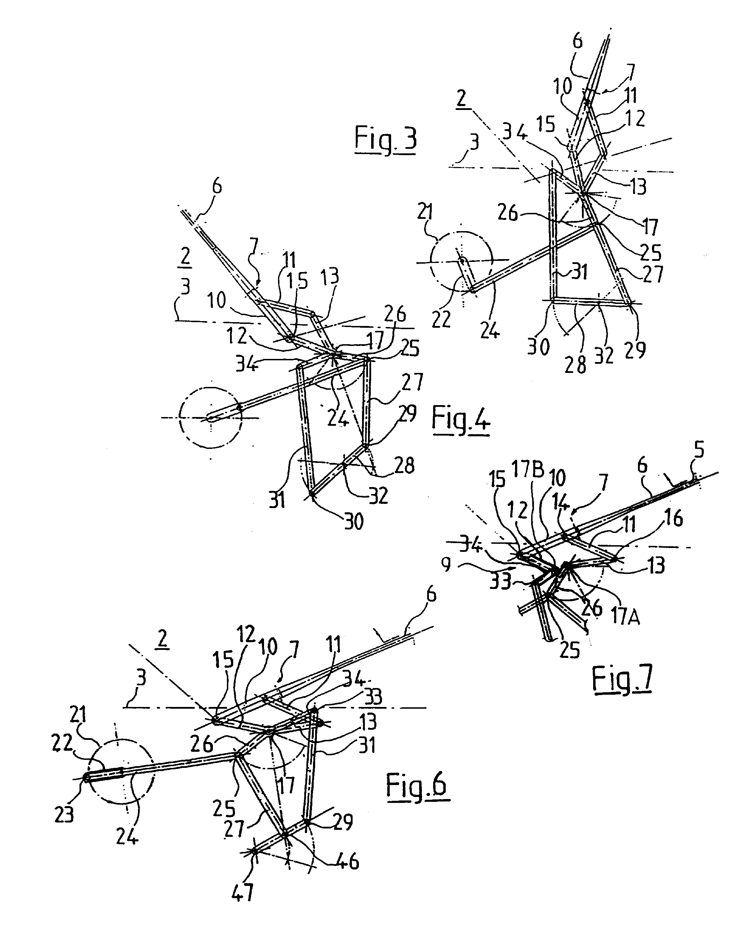

On se reporte maintenant aux figures 3 et 4 dans lesquelles le système d'essuie-glace selon l'invention est montré, pour la figure 3, dans une position médiane de la course aller et pour la figure 4, dans une position fin de course aller.

Comme montré à la figure 3 et à partir de la figure 2, la manivelle 22 soumise à un mouvement de rotation, a commandé la bielle 24 de manière à obtenir une configuration dans laquelle les bielles 26 et 27 soient dans le prolongement l'une de l'autre, la rotation de la manivelle 22 correspondant sensiblement à la moitié de la course aller du dispositif d'essuie-glace.

Pendant ce mouvement la bielle 26 s'est débattue d'un certain angle à partir de la position représentée à la figure 2, et de par sa liaison à rotation avec la bielle 13 a entraîné cette dernière dans un débattement angulaire qui est égal à l'angle parcouru par la bielle 26.

De par la liaison entre la bielle 13 et le bras auxiliaire 10 grâce à la bielle 11, le bras auxiliaire 10, le bras principal 6 et le balai 5 sont soumis à un mouvement de rotation autour de l'axe 15.

La bielle 27 reliée à la bielle 26 par l'axe 25 est soumis à un déplacement combiné de rotation dans la direction de la bielle 24 autour de l'articulation 29 et de translation dans la direction de cette articulation et cela selon la circonférence décrite par l'articulation 25 autour de l'axe 17. Ce mouvement résultant de translation est transmis à la bielle 28 par l'articulation 29, ladite bielle de par son articulation sur l'axe fixe 32, joue un rôle d'inverseur et change le sens de débattement de l'articulation 30 portée par son autre extrémité en transmettant ainsi ce mouvement angulaire à la bielle 31 qui, se déplaçant linéairement, commande la bielle 34 liée à rotation avec la bielle 12 autour de l'axe 17.

Ainsi le débattement angulaire de la bielle 34 se traduit par un débattement angulaire de la bielle 12 qui permet de changer la position de l'axe 15 selon la circonférence décrite par l'axe 15 et autorise ainsi un déplacement vers la partie supérieure 4 de ladite surface de l'ensemble bras auxiliaire-bras principal-balai..

En se référant à la figure 4 et à partir de la figure 3, la manivelle 22 a continué son mouvement de rotation, dans le même sens, de manière à ce que la bielle 24 soit dans le prolongement de ladite manivelle.

Pendant le mouvement de translation de la bielle 24, celle-ci commande par l'articulation commune 25 les bielles 26 et 27.

La bielle 26 pivote, sous l'action de la bielle 24, autour de l'axe fixe 17 en entraînant de par sa solidarisation avec elle, la bielle 13 qui transmet son mouvement au bras auxiliaire 10 par la bielle 11 qui commande en rotation, autour de l'axe 15, le bras auxiliaire 10, le bras principal 6 et le balai 5.

La bielle 27, de par sa liaison à rotation avec la bielle 26, est soumise à une combinaison de mouvement dont la résultante est un déplacement linéaire qui fait en sorte que l'articulation 29, entre la bielle 27 et la bielle 28, ait un mouvement angulaire inverse à celui décrit pour passer de la figure 2 à la figure 3.

De par la disposition de l'axe d'articulation fixe 32 disposé sur le levier 28, ledit levier inverse le sens de rotation de son autre extrémité portant l'axe d'articulation 30 avec la bielle 31 et soumet ladite bielle à un mouvement inverse de celui précédemment décrit.

La bielle 31 liée à articulation avec la bielle 34 entraîne cette dernière dans un débattement angulaire inverse de celui de la figure 3 de façon à ce que l'axe 15 ait un mouvement circonférentiel autour de l'axe 17 tendant à faire changer la position dudit axe de manière à déplacer l'ensemble bras-balai dans une direction inverse à celle décrite précédemment.

On remarquera que le parallélogramme 9 n'est pas déformé en passant de la configuration de la figure 3 à celle de la figure 4, ce qui ne peut qu'améliorer le rendement du sytème.

La figure 5 montre une réalisation pratique du dispositif d'essuyage selon l'invention.

Pour cela il est prévu une pièce fixe 40 disposée au voisinage du bord inférieur 3 du pare-brise 2, ladite pièce fixe comportant d'une part l'axe d'articulation 17 et d'autre part un fourreau cylindrique 41 débouchant au-delà de la carrosserie 42 située au voisinage dudit pare-brise.

Ce fourreau 41 comporte dans son volume interne une pièce cylindrique 43 servant de moyen de liaison à rotation entre la bielle 12 et la bielle 34, ladite pièce étant apte à se débattre dans ledit fourreau.

Sur la périphérie externe du fourreau 41 est prévu un autre fourreau 44, disposé concentriquement avec le fourreau 41, et servant de liaison à rotation entre la bielle 13 et la bielle 26 qui sont fixées respectivement à la partie supérieure et à la partie inférieure dudit fourreau qui est apte à se débattre également autour du fourreau 41.

La figure 6 illustre une variante de l'invention et reprend essentiellement les mêmes éléments que ceux décrits en référence aux figures 2 à 4 et pour cela comportera les mêmes références.

Dans cette variante le bras auxiliaire 10 fait partie d'un système de bielles 11, 14, 13 formant un quadrilatère déformable 9 porté par un axe fixe 17 et le pentagone déformable 18 est constitué d'un système de bielles dont la différence par rapport à celui décrit précédemment provient du fait que la bielle 45, jouant un rôle d'inverseur identique à celui de la bielle 28 des figures 2 à 5, est articulée à une de ses extrémités sur un axe 46 fixe en position, que le premier système de bielles 19 a la bielle 27 articulée sur un axe 46 correspondant sensiblement à la position de l'axe fixe 32 précédemment décrit, que le deuxième système de bielles 20 est articulé sur l'axe 29 en ayant la bielle 34 disposée symétriquement par rapport à celle de la figure 1.

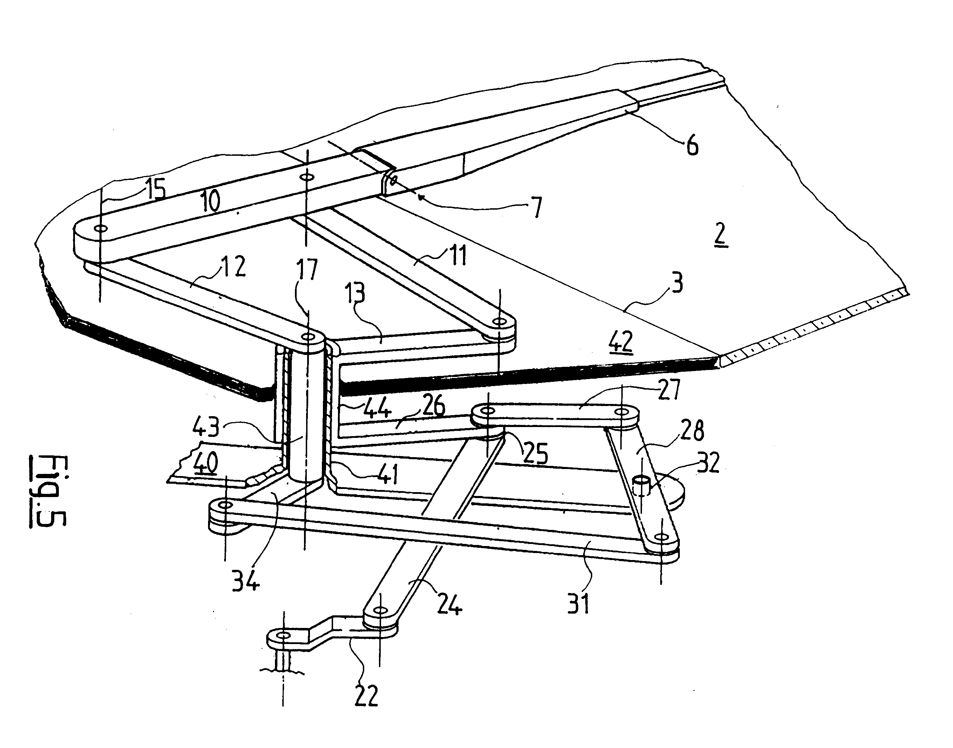

Dans la variante de la figure 7, l'axe d'articulation 17, fixe par rapport à la carosserie, est constitué de deux points d'articulation 17A et 17B, fixe également par rapport à la carosserie et à distance l'un de l'autre.

Le point fixe 17A sert de point d'articulation pour les bielles 26 et 13 alors que le point fixe 17B sert de point d'articulation pour les bielles 34 et 12 et sont configurés de manière à garder une disposition telle que subsiste un quadrilatère entrainé en déformation par un pentagone déformable.

## Revendications

1. Dispositif d'essuie-glace à balayage non circulaire, notamment pour véhicule automobile, comportant au moins un bras d'essuie-glace (6) portant un balai d'essuie-glace (5) et qui est déplacé par un mécanisme d'entraînement (8) dans un mouvement de rotation alternatif combiné à un mouvement de translation et comprenant une première bielle (10) portant le bras d'essuie-glace (6), cette première bielle (10) étant articulée sur un axe mobile (15) avec une deuxième bielle (12) pivotant autour d'un premier axe fixe (17,17B) par rapport à la carrosserie de telle sorte que la première bielle (10) soit susceptible de tourner par rapport à la deuxième (12) autour de l'axe mobile (15) en même temps que l'axe mobile (15) se déplace le long de la surface à essuyer, caractérisé en ce que le mécanisme d'entraînement (8) comporte une troisième (11) et une quatrième (13) bielles qui forment avec les première (10) et deuxième (12) bielles précitées un quadrilatère déformable, la première bielle (10) étant reliée par la troisième bielle (11) à une quatrième bielle (13) qui pivote autour du premier ou d'un second axe (17,17A) fixe par rapport à la carrosserie, la quatrième bielle (13) étant reliée cinématiquement avec la deuxième bielle (12) par un deuxième système de bielles articulées (26,27,28,31,34) formant un pentagone déformable (18) dont la déformation entraîne le mouvement de rotation de la première bielle (10) autour de l'axe mobile (15) et le déplacement de l'axe mobile (15) le long de la surface à balayer.

2. Dispositif d'essuie-glace selon la revendication 1, caractérisé en ce que l'ensemble bras-balai (6,5) est articulé autour d'un axe d'articulation (7) porté par la première bielle (10).

3. Dispositif d'essuie-glace selon la revendication 1 ou 2, caractérisé en ce que le pentagone déformable (18) est articulé sur deux axes fixes (17;32;47).

4. Dispositif d'essuie-glace selon l'une des revendications précédentes, caractérisé en ce que l'axe fixe (17) est commun au quadrilatère déformable (9) et au pentagone déformable (18).

5. Dispositif d'essuie-glace selon l'une des revendications précédentes, caractérisé en ce que l'axe fixe (17) se compose de deux axes fixes (17A,17B) à distance l'un de l'autre.

6. Dispositif d'essuie-glace selon l'une des revendications précédentes, caractérisé en ce qu'une première bielle (26) du deuxième système de bielles est liée à rotation autour d'un axe fixe (17,17A) avec la quatrième bielle (13) du premier système de bielles et en ce qu'une deuxième bielle (34) du deuxième système de bielles est liée à rotation autour d'un axe (17,17B) avec la deuxième bielle (12) du premier système de bielles.

7. Dispositif d'essuie-glace selon l'une des revendications précédentes, caractérisé en ce qu'une troisième bielle du deuxième système de bielles (28,45) est reliée à la première bielle (26) par une quatrième bielle (27), la quatrième bielle (27) formant un angle non nul avec la première bielle (26).

8. Dispositif d'essuie-glace selon l'une des revendications précédentes, caractérisé en ce la troisième bielle (28,45) du deuxième système de bielles est articulée sur le second axe fixe (32,47) de manière à obtenir un inverseur de sens.

9. Dispositif d'essuie-glace selon l'une des revendications précédentes, caractérisé en ce que le point d'articulation (25) entre la première (26) et la quatrième (27) bielles du second système de bielles sert de point d'articulation à un système de commande (21,22,23,24).

10. Dispositif d'essuie-glace selon l'une des revendications précédentes, caractérisé en ce que les première (26) et quatrième (27) bielles du second système de bielles sont amenées dans le prolongement l'une de l'autre par le moyen de commande (21,22,23,24) de manière à faire débattre la troisième bielle (32) du second système de bielles dans un premier sens et, à partir de cette configuration, le moyen de commande (21,22,23,24) déforme le pentagone de manière à inverser le sens de débattement de la troisième bielle du second système de bielles.

11. Dispositif d'essuie-glace selon l'une des revendications précédentes, caractérisé en ce que la première bielle (26) du second système de bielles commande le mouvement en rotation du bras principal par l'intermédiaire des quatrième (13) et troisième (11) bielles du premier système de bielles et en ce que les quatrième (27), troisième (28,45), cinquième (31) et deuxième (34) bielles du second système de bielles commandent le mouvement en translation dudit bras par l'intermédiaire de la deuxième bielle (12) du premier système de bielles (12).

## Patentansprüche

1. Scheibenwischanlage mit nicht kreisförmigem Wischbild, insbesondere für Kraftfahrzeuge, enthaltend wenigstens einen Scheibenwischerarm (6) mit einer Scheibenwischerleiste (5), der durch einen Antriebsmechanismus (8) in einer abwechselnden Drehbewegung, kombiniert mit einer translatorischen Bewegung, verschoben wird und mit einer ersten Stange (10), die den Scheibenwischerarm (6) trägt, wobei diese erste Stange (10) gelenkig an einer beweglichen Achse (15) befestigt ist, während eine zweite Stange (12) um eine erste, im Verhältnis zur Karosserie feststehende Achse (17, 17B) schwenkbar ist, so daß die erste Stange (10) gegenüber der zweiten Stange (12) um die bewegliche Achse (15) herum eine Drehbewegung ausführen kann, während die bewegliche Achse (15) sich entlang der zu wischenden Oberfläche bewegt, **dadurch gekennzeichnet**, daß der Antriebsmechanismus (8) eine dritte (11) und eine vierte (13) Stange aufweist, die mit der vorgenannten ersten (10) und zweiten (12) Stange ein verformbares Viereck bilden, wobei die erste Stange (10) über die dritte Stange (11) mit einer vierten Stange (13) verbunden ist, die um die erste oder eine zweite Achse (17, 17A), die im Verhältnis zur Karosserie feststeht, geschwenkt wird, während die vierte Stange (13) kinematisch mit der zweiten Stange (12) über ein zweites System von Gelenkstangen (26, 27, 28, 31, 34) verbunden ist, die ein verformbares Fünfeck (18) bilden, dessen Verformung die Drehbewegung der ersten Stange (10) um die bewegliche Achse (15) und die Verschiebung der beweglichen Achse (15) entlang der zu wischenden Oberfläche bewirkt.

2. Scheibenwischanlage nach Anspruch 1, **dadurch gekennzeichnet,** daß die aus Wischarm und Leiste bestehende Einheit (6, 5) gelenkig um eine Achse (7) drehbar ist, die auf der ersten Stange (10) aufliegt.

3. Scheibenwischanlage nach Anspruch 1 oder 2, **dadurch gekennzeichnet,** daß das verformbare Fünfeck (18) an zwei feststehenden Achsen (17, 32, 47) gelenkig befestigt ist.

4. Scheibenwischanlage nach einem der vorherigen Ansprüche, **dadurch gekennzeichnet,** daß die feststehende Achse (17) dem verformbaren Viereck (9) und dem verformbaren Fünfeck (18) gleichzeitig dient.

5. Scheibenwischanlage nach einem der vorherigen Ansprüche, **dadurch gekennzeichnet,** daß sich die feststehende Achse (17) aus zwei feststehenden Achsen (17A, 17B) zusammensetzt, die einen Abstand zueinander aufweisen.

6. Scheibenwischanlage nach einem der vorherigen Ansprüche, **dadurch gekennzeichnet,** daß eine erste Stange (26) des zweiten Stangensystems um eine feststehende Achse (17, 17A) drehbar mit der vierten Stange (13) des ersten Stangensystems, verbunden ist und daß eine zweite Stange (34) des zweiten Stangensystems um eine Achse (17, 17B) drehbar mit der zweiten Stange (12) des ersten Stangensystems verbunden ist.

7. Scheibenwischanlage nach einem der vorherigen Ansprüche, **dadurch gekennzeichnet,** daß eine dritte Stange des zweiten Stangensystems (28, 45) mit der ersten Stange (26) über eine vierte Stange (27) verbunden ist, wobei die vierte Stange (27) einen Nicht-Null-Winkel zur ersten Stange (26) bildet.

8. Scheibenwischanlage nach einem der vorherigen Ansprüche, **dadurch gekennzeichnet,** daß die dritte Stange (28, 45) des zweiten Stangensystems gelenkig so an der zweiten feststehenden Achse (32, 47) befestigt ist, daß ein Richtungsumschalter entsteht.

9. Scheibenwischanlage nach einem der vorherigen Ansprüche, **dadurch gekennzeichnet,** daß der Gelenkpunkt (25) zwischen der ersten (26) und der vierten (27) Stange des zweiten Stangensystems als Gelenkpunkt für ein Betätigungssystem (21, 22, 23, 24) dient.

10. Scheibenwischanlage nach einem der vorherigen Ansprüche, **dadurch gekennzeichnet,** daß die erste (26) und die vierte (27) Stange des zweiten Stangensystems durch das Betätigungsmittel (21, 22, 23, 24) die Verlängerung voneinander bilden, so daß die dritte Stange (32) des zweiten Stangensystems in einer ersten Richtung verschoben wird und das Betätigungsmittel (21, 22, 23, 24), ausgehend von dieser Konfiguration, das Fünfeck so verformt, daß die Bewegungsrichtung der dritten Stange des zweiten Stangensystems umgekehrt wird.

11. Scheibenwischanlage nach einem der vorherigen Ansprüche, **dadurch gekennzeichnet,** daß die erste Stange (26) des zweiten Stangensystems die Drehbewegung des Hauptarms mittels der vierten (13) und der dritten (11) Stange des ersten Stangensystems steuert und daß die vierte (27), dritte (28, 45), fünfte (31) und zweite (34) Stange des zweiten Stangensystems die translatorische Bewegung des genannten Arms mittels der zweiten Stange (12) des ersten Stangensystems (12) steuern.

## Claims

1. Screen wiper apparatus having a non-circular action, especially for a motor vehicle, comprising at least one screen wiper arm (6), carrying a wiper blade (5) and displaced by a drive mechanism (8) in alternating rotary motion combined with translational motion, and including a first crank (10) carrying the screen wiper arm (6), the said first crank (10) being articulated on a movable axis (15) with a second crank (12) that pivots about a first fixed axis (17, 17B) with respect to the bodywork, in such a way that the first crank (10) is adapted to turn with respect to the second crank (12) about the movable axis (15) at the same time as the movable axis (15) is displaced along the swept surface, characterised in that the drive mechanism (8) includes a third crank (11) and a fourth crank (13), which define a deformable quadrilateral with the said first crank (10) and second crank (12), the first crank (10) being connected through the third crank (11) to a fourth crank (13) which pivots about the first axis or a second axis (17, 17A), the latter being fixed with respect to the bodywork, the fourth crank (13) being kinematically coupled to the second crank (12) through a second system of articulated cranks (26, 27, 28, 31, 34) defining a deformable pentagon (18), the deformation of which drives the rotary movement of the first crank (10) about the movable axis (15) and the displacement of the movable axis (15) along the swept surface.

2. Screen wiping apparatus according to Claim 1, characterised in that the assembly comprising the arm and blade (6, 5) is articulated about an axis of articulation (7) carried by the first crank (10).

3. Screen wiping apparatus according to Claim 1 or Claim 2, characterised in that the deformable pentagon (18) is articulated on two fixed axes (17; 32; 47).

4. Screen wiping apparatus according to one of the preceding Claims, characterised in that the fixed axis (17) is common to the deformable quadrilateral (9) and to the deformable pentagon (18).

5. Screen wiping apparatus according to one of the preceding Claims, characterised in that the fixed axis (17) comprises two fixed axes (17A, 17B) spaced away from each other.

6. Screen wiping apparatus according to one of the preceding Claims, characterised in that a first crank (26) of the second crank system is coupled in rotation about a fixed axis (17, 17A) to the fourth crank (13) of the first crank system, and in that a second crank (34) of the second crank system is coupled in rotation about an axis (17, 17B) to the second crank (12) of the first crank system.

7. Screen wiping apparatus according to one of the preceding Claims, characterised in that a third crank of the second crank system (28, 45) is coupled to the first crank (26) through a fourth crank (27), the fourth crank (27) defining a non-zero angle with the first crank (26).

8. Screen wiping apparatus according to one of the preceding Claims, characterised in that the third crank (28, 45) of the second crank system is articulated on the second fixed axis (32, 47) in such a way as to define a direction reversing means.

9. Screen wiping apparatus according to one of the preceding Claims, characterised in that the point of articulation (25) between the first crank (26) and the fourth crank (27) of the second crank system acts as a point of articulation to a control system (21, 22, 23, 24).

10. Screen wiping apparatus according to one of the preceding Claims, characterised in that the first crank (26) and the fourth crank (27) of the second crank system are brought into mutually extending relationship by the control means (21, 22, 23, 24), such as to cause the third crank (32) of the second crank system to be deflected in a first direction and, starting from this configuration, the control means (21, 22, 23, 24) deforms the pentagon in such a way as to reverse the direction of displacement of the third crank of the second crank system.

11. Screen wiping apparatus according to one of the preceding Claims, characterised in that the first crank (26) of the second crank system controls the rotational movement of the main arm through the fourth crank (13) and the third crank (11) of the first crank system, and in that the fourth crank (27), the third crank (28, 45), a fifth crank (31), and the second crank (34), all being cranks of the second crank system, control the translational movement of the said arm through the second crank (12) of the first crank system.
